# FASCICULE DE BREVET EUROPEEN

(11) **EP 1 262 036 B1**
(45) Date de publication et mention de la délivrance du brevet: **29.08.2007**
(21) Numéro de dépôt: 01907767.6
(22) Date de dépôt: 12.02.2001
(51) Int. Cl.: H04L 9/08

(54) **SOURCE A PEU DE PHOTONS COMMANDABLE**
STEUERBARE PHOTONENQUELLE MIT GERINGER PHOTONENEMISSION
CONTROLLABLE LOW PHOTON SOURCE

(30) Priorité: 10.03.2000 FR 0003096
(43) Date de publication de la demande: 04.12.2002
(73) Titulaire: FRANCE TELECOM, 75015 Paris (FR)
(72) Inventeur: DE FORNEL, Frédérique, 21000 Dijon (FR); FAVENNEC, Pierre-Noel, 75015 Paris (FR); RAHAMANI, Adel, Bât. Le Charme, 69130 Ecully (FR); SALOMON, Laurent, 21000 Dijon (FR); BERGUIBA, Lotfi, 69007 Lyon (FR)
(74) Mandataire: Lemoyne, Didier
(86) Numéro de dépôt international: PCT/FR2001/000402
(87) Numéro de publication internationale: WO 2001/069841

(56) Documents cités:
- WO-A-97/44936
- WO-A-98/11457
- US-A- 5 675 648
- LAPORTA P ET AL: "10 KHZ-LINEWIDTH DIODE-PUMPED ER: YB: GLASS LASER" ELECTRONICS LETTERS,GB,IEE STEVENAGE, vol. 28, no. 22, 22 octobre 1992 (1992-10-22), pages 2067-2069, XP000320718 ISSN: 0013-5194

## Description

La présente invention concerne une source à peu de photons commandable et à longueur d'onde prédéterminée.

L'invention trouve une application particulièrement avantageuse dans le domaine des télécommunications optiques, notamment les télécommunications à faible distance et privatives de haute sécurité.

Dans la suite de ce mémoire, on entendra par l'expression « source à peu de photons » un source lumineuse susceptible d'émettre un photon unique ou quelques photons

D'une manière générale, les télécommunications optiques classiques mettent en oeuvre des équipements qui, comme les sources laser, sont prévus pour permettre l'utilisation de photons en grande concentration, ceci afin d'obtenir une puissance lumineuse maximale et la distance de communication la plus grande.

Cependant, des travaux sont actuellement menés en direction de systèmes de communications optiques à très faible flux de photons, allant même jusqu'à des systèmes à photon unique (voir les articles de J.P. Goedgebuer, L. Larger et D. Delorme, Phys. Rev. Lett., 82, 8, 1656, 1999 et de A. Muller, H. Zbinden et N. Gisin, Europhys. Lett., 33, 335, 1995). En effet, ces dispositifs à peu de photons sont particulièrement recherchés pour l'étude de la cryptographie quantique, laquelle repose sur les modifications de signature des photons lorsqu'ils sont détectés, en vertu du principe d'incertitude d'Eisenberg. Il faut alors pouvoir manipuler et identifier des photons uniques et, par conséquent, de disposer de véritables sources à un photon ou d'atténuer des flux de photons et de travailler sur des statistiques.

Les sources à peu de photons étudiées aujourd'hui partent généralement de structures relativement compliquées : structures complexes III-V en microcavités ou molécules chromophores très diluées. Mais, en tout état de cause, ces systèmes connus ne conduisent pas à des sources à peu de photons qui seraient utilisables en télécommunications optiques en vue du déploiement de la cryptographie quantique.

Aussi, le problème technique à résoudre par l'objet de la présente invention est de proposer une source à peu de photons commandable et à longueur d'onde prédéterminée, qui présenterait une structure simple, dont le débit serait faible et commandable, et qui pourrait fonctionner à la température ambiante à des longueurs d'onde intéressantes pour les télécommunications optiques sur fibre, notamment dans le proche infrarouge autour de 1,5 µm.

La solution au problème technique posé consiste, selon la présente invention, en ce que ladite source comprend un matériau solide dans lequel sont implantés en concentration diluée des éléments luminescents à ladite longueur d'onde prédéterminée, un dispositif d'excitation desdits éléments luminescents, et une sonde apte à capturer, par couplage en champ proche, au moins un photon émis par un des éléments luminescents.

Ainsi, dans la source conforme à l'invention, les photons sont émis par les éléments luminescents implantés dans le matériau solide en quantité connue et contrôlée en fonction de la concentration recherchée. Puis, ils sont capturés par la sonde selon des processus physiques liés à l'optique de champ proche.

Pour obtenir un source à peu de photons conforme à l'invention, on prévoit que la concentration surfacique des éléments luminescents dans le matériau solide est inférieure à 10 par µm2. Plus particulièrement, la concentration surfacique est inférieure à 1 par µm2 pour une source à photon unique.

La source à peu de photons commandable, objet de l'invention, permet donc de réaliser des communications totalement sécurisées par la cryptographie quantique, que ce soit sur fibre ou sans fil dans l'espace libre. Dans le premier cas, le photon capturé par ladite sonde est émis dans l'espace libre, puis détecté par des transducteurs optiques. Ce type de mise en oeuvre convient à des communications à courtes distances, de l'ordre de quelques dizaines de mètres. Dans le deuxième cas, une fibre optique est couplée à ladite sonde pour le transport du photon capturé, jusqu'à un dispositif de détection. Ce mode de réalisation permet des communications sur des sites plus étendus, de 20 km de rayon maximum, ou dans des immeubles d'affaires par exemple.

De manière avantageuse, l'élément luminescent est un ion de terre rare notamment pris dans la liste constituée par l'erbium, le praséodyme, le néodyme et l'ytterbium. On choisira plus spécialement l'ion Er3+ dont la longueur d'onde d'émission située à 1,5 µm est très largement utilisée dans les télécommunications optiques sur fibre. Les ions erbium sont de préférence implantés sous concentration diluée dans un matériau solide présentant une grande bande d'énergie interdite, les isolants électriques en particulier, car il a été établi (Electronics Letters, 25, 11, 718, 1989) que l'émission de l'erbium à 1,5 µm à la température ambiante est obtenue sous une excitation supérieure à 0,8 eV, ce qui impose des matériaux-hôtes dont la bande d'énergie interdite soit au moins égale à cette valeur.

De façon pratique, ladite sonde est formée par une pointe fine de taille inférieure à 1 µm. A titre d'exemple, elle est constituée par l'extrémité d'une fibre optique, en verre ou en silice.

Enfin, la source à peu de photons selon l'invention présente l'avantage de pouvoir être commandée. A cet effet, il est prévu qu'elle comprend des moyens de contrôle de la capture par la sonde du photon émis. Ces moyens peuvent être de moyens de contrôle de la distance entre la sonde et l'élément luminescent.

En conclusion, la source à peu de photons commandable, objet de l'invention, ouvre la voie à des systèmes de communications optiques quantiques sur fibre ou sans fil, à faibles distances et hautement sécurisées par l'utilisation de la cryptographie quantique.

La description qui va suivre en regard des dessins annexés, donnés à titre d'exemples non limitatifs, fera bien comprendre en quoi consiste l'invention et comment elle peut être réalisée.

La figure 1 est un schéma d'un mode de réalisation d'une source à photon unique commandable conforme à l'invention.

La figure 2 est un schéma d'un mode de réalisation d'une source à quelques photons conforme à l'invention.

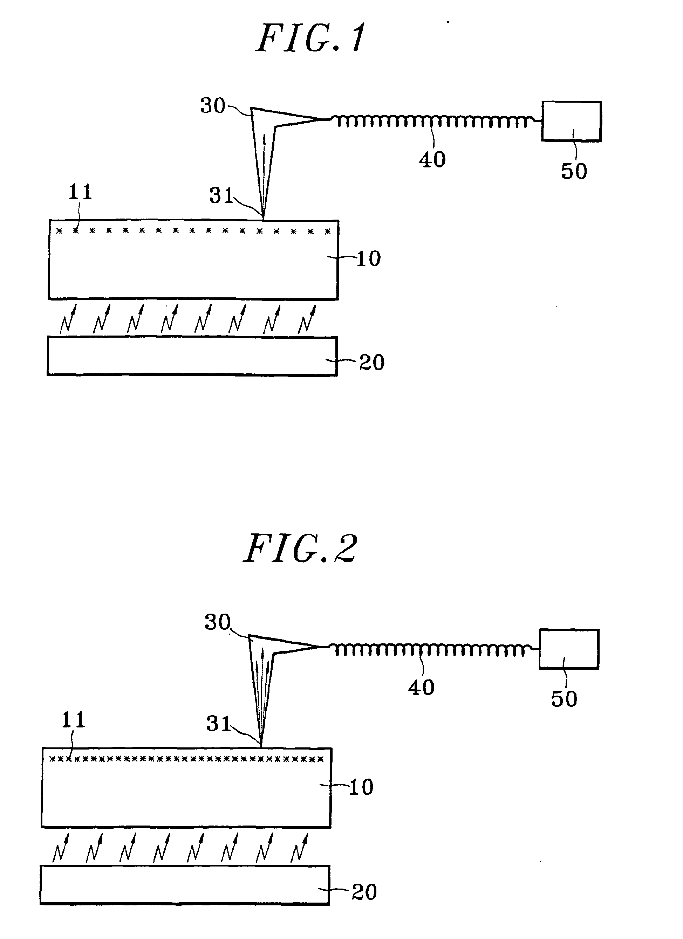

Sur la figure 1 est représentée une source à photon unique commandable et à longueur d'onde prédéterminée, par exemple 1,5 µm, comprenant un matériau solide 10, ou matériau-hôte, dans lequel sont implantés des éléments luminescents 11 émettant à 1,5 µm quand ils sont soumis au rayonnement produit par un dispositif 20 d'excitation. L'élément luminescent de choix à cette longueur d'onde est l'ion erbium Er3+.

Le matériau-hôte 10 sera de préférence de la silice se présentant sous forme de plaquette, facilement manipulable, diélectrique et donc à large bande d'énergie interdite, favorable à la luminescence de la terre rare à température ambiante. La silice présente en outre l'avantage d'avoir de l'oxygène comme constituant principal. Il a en effet été démontré que, pour augmenter l'efficacité optique de l'impureté erbium, il était préférable d'utiliser des matériaux-hôtes ayant comme éléments principaux de l'oxygène ou du fluor (Japanese Journal of Applied Physics, 29, L524, 1990). De plus, ce matériau est stable chimiquement, il peut être facilement implanté et recuit jusqu'à des températures de 900°C sans dégradation.

L'implantation est effectuée conformément aux résultats des travaux de P.-N. Favennec et de ses collaborateurs (voir « L'implantation ionique pour la microélectronique et l'optoélectronique », Collection Technique et Scientifique des Télécommunications, Editions Masson, 1993).

Les paramètres proprement dits d'implantation et les recuits sont conditionnés par le choix de la silice. L'énergie des ions utilisée peut varier de 10 keV à 800 keV. Les doses implantées devront être compatibles avec le résultat recherché. Pour une source à photon unique, la concentration d'erbium en surface du matériau solide 10 sera de préférence inférieure à 1 par µm2. Les recuits sont nécessaires pour activer optiquement les ions erbium, c'est à dire pour qu'ils se mettent en site stable dans le matériau-hôte, et pour réarranger la silice perturbée par le bombardement ionique en évitant ainsi une absorption des photons par des défauts induits. L'optimisation des conditions de recuit des plaquettes de silice implantées donne les conditions suivantes : de 600 à 900°C pour les températures et de quelques secondes à quelques dizaines de minutes pour les temps de recuit.

Si l'erbium a été explicitement mentionné plus haut, c'est parce que sa longueur d'onde d'émission à 1,5 µm présente un fort intérêt en télécommunication optique. Mais il est bien entendu que d'autres espèces chimiques sont susceptibles d'être utilisées. Parmi les terres rares, on peut citer, en plus de l'erbium, le praséodyme (1,3 µm), le néodyme (1,06 µm) et l'ytterbium (1 µm). Mentionnons également l'uranium pour une émission à 2,5 µm. Enfin, les molécules organiques luminescentes peuvent aussi convenir.

Le matériau solide 10 n'est pas non plus limité à la silice mais peut être étendu à d'autres matériaux, la règle pour le choix du couple matériau-hôte/élément luminescent étant que la bande d'énergie interdite du matériau soit inférieure à l'énergie de la transition radiative de l'élément luminescent.

Parmi les matériaux isolants électriques, on peut choisir, outre la silice, l'alumine, un nitrure, un polymère, un verre de silice ou fluoré, un cristal fluoré, un sol-gel. Conviennent également les semi-conducteurs cristallins (GaN, GaAs, GaP, GaSb, InP et leurs dérivés) ou non cristallins comme le silicium amorphe ou polycristallin.

Le dispositif 20 d'excitation doit fournir des photons de longueur d'onde inférieure à la longueur d'onde de luminescence souhaitée. Ainsi, si l'on veut une émission de photons à 1,5 µm par excitation d'ions erbium, le faisceau excitateur devra contenir des photons de longueur d'onde inférieure à 1,5 µm, ce peut donc être un faisceau lumineux situé dans le proche infra-rouge, le visible ou l'ultra-violet.

L'excitation se fait par tout dispositif 20 commandable électroniquement en impulsions courtes dont le rayonnement est photonique et issu d'un laser, d'une source de lumière blanche, ou obtenu par bombardement électronique au moyen d'un canon à électrons par exemple.

Comme le montre la figure 1, un photon émis par un élément luminescent est capturé par une sonde 30 selon le mécanisme physique du couplage en champ proche. D'une manière générale, l'optique de champ proche résulte de l'interaction, à une distance inférieure à la longueur d'onde utilisée, entre un élément nanométrique et le champ total généré au voisinage de l'espèce luminescente (« Les ondes évanescentes en optique et en optoélectronique » par F. de Fornel, Collection Technique et Scientifique des Télécommunications, Editions Eyrolles, 1997). Sur la figure 1, ledit élément nanométrique est constitué par la sonde 30, laquelle est formée par une pointe effilée 31 de taille inférieure à 1 µm placée à moins de 100 nm de la surface du matériau solide 10. La fonction de la sonde 30 est donc de capturer le photon émis par un élément luminescent et de le guider jusqu'à une fibre optique 40 terminée par un détecteur 50.

La pointe effilée 31 de la sonde 30 peut être une extrémité de fibre optique de silice, de verre fluoré, de silice dopée à l'erbium ou une autre terre rare. Elle peut être également diélectrique ou semiconductrice, en carbone ou en silicium. Enfin, elle peut être revêtue totalement ou superficiellement d'autres marériaux diélectriques ou métalliques.

La source de la figure 1 est commandée en intensité par des moyens de contrôle de la capture par la sonde 30 du photon émis. Ces moyens peuvent être des moyens de contrôle de la distance entre la sonde 30 et l'élément luminescent, comme des composants piézoélectriques, photoélastiques, microélectromécaniques.

La source de la figure 2 diffère de celle de la figure 1 en ce qu'il s'agit d'une source à quelques photons dans laquelle la concentration en surface des éléments luminescents est plus élevée mais inférieure à 10 par µm2. Une autre différence réside dans le fait que les photons capturés par la sonde 30 sont émis sans fil à l'air libre jusqu'au détecteur 50. La portée d'une telle source est bien entendu inférieure à celle d'une source guidée par fibre comme dans le cas de la figure 1.

## Revendications

1. Source à peu de photons commandable et à longueur d'onde prédéterminée, **caractérisée en ce que** ladite source comprend un matériau solide (10) dans lequel sont implantés en concentration diluée des éléments luminescents (11) à ladite longueur d'onde prédéterminée, un dispositif (20) d'excitation desdits éléments luminescents, et une sonde (30) apte à capturer, par couplage en champ proche, au moins un photon émis par un des éléments luminescents.

2. Source selon la revendications 1, **caractérisée en ce que** la concentration surfacique des éléments luminescents dans le matériau solide est inférieure à 10 par µm2.

3. Source selon la revendication 2, **caractérisée en ce que** la concentration surfacique est inférieure à 1 par µm2 pour une source à photon unique.

4. Source selon l'une quelconque des revendications 1 à 3, **caractérisée en ce que** le photon capturé par ladite sonde (30) est émis dans l'espace libre.

5. Source selon l'une quelconque des revendications 1 à 3, **caractérisée en ce qu'** une fibre optique (40) est couplée à ladite sonde (30) pour le transport du photon capturé.

6. Source selon l'une quelconque des revendications 1 à 5, **caractérisée en ce que** ledit élément luminescent est un ion de terre rare.

7. Source selon la revendication 6, **caractérisée en ce que** ladite terre rare est choisie dans la liste constituée par l'erbium, le praséodyme, le néodyme, et l'ytterbium.

8. Source selon l'une quelconque des revendications 1 à 5, **caractérisée en ce que** ledit élément luminescent est de l'uranium.

9. Source selon l'une quelconque des revendications 1 à 5, **caractérisée en ce que** ledit élément luminescent est une molécule organique.

10. Source selon l'une quelconque des revendications 1 à 9, **caractérisée en ce que** ledit matériau solide (10) est un isolant électrique.

11. Source selon la revendication 10, **caractérisée en ce que** ledit isolant électrique est choisi dans la liste constituée par la silice, l'alumine, un nitrure, un polymère, un verre, un cristal fluoré, un sol-gel.

12. Source selon l'une quelconque des revendications 1 à 9, **caractérisée en ce que** ledit matériau solide (10) est un semi-conducteur.

13. Source selon la revendication 12, **caractérisée en ce que** ledit semi-conducteur est choisi dans la liste constituée par le silicium amorphe, le silicium polycristallin, ainsi que par GaN, GaAs, GaP, GaSb, InP et leurs dérivés.

14. Source selon l'une quelconque des revendications 1 à 13, **caractérisée en ce qu'**elle comprend des moyens de contrôle de la capture par la sonde (30) du photon émis.

15. Source selon la revendication 14, **caractérisée en ce que** lesdits moyens de contrôle sont des moyens de contrôle de la distance entre la sonde (30) et l'élément luminescent.

16. Source selon l'une quelconque des revendications 1 à 15, **caractérisée en ce que** ladite sonde (30) est formée par une pointe effilée (31) de taille inférieure à 1 µm.

17. Source selon la revendication 16, **caractérisée en ce que** ladite pointe effilée (31) est en un matériau diélectrique ou semiconducteur.

18. Source selon la revendication 16, **caractérisée en ce que** ladite pointe effilée (31) est en carbone ou en silicium.

19. Source selon l'une quelconque des revendications 16 à 18, **caractérisée en ce que** ladite pointe effilée (31) est constituée par l'extrémité d'une fibre optique.

## Claims

1. A controllable source of few photons of predetermined wavelength, the source being **characterized in that** it comprises a solid material (10) having a dilute concentration of elements (11) implanted therein that emit light at said predetermined wavelength, an excitation device (20) for exciting said light-emitting elements, and a probe (30) suitable for capturing, by near field coupling, at least one photon emitted by one of the light-emitting elements.

2. A source according to claim 1, **characterized in that** the concentration per unit area of the light-emitting element in the solid material is fewer than 10 per µm².

3. A source according to claim 2, **characterized in that** the concentration per unit area is fewer than 1 per µm² for a single-photon source.

4. A source according to any one of claims 1 to 3, **characterized in that** the photon captured by said probe (30) is emitted into free space.

5. A source according to any one of claims 1 to 3, **characterized in that** an optical fiber (40) is coupled to said probe (30) to transport the captured photon.

6. A source according to any one of claims 1 to 5, **characterized in that** said light-emitting element is a rare-earth ion.

7. A source according to claim 6, **characterized in that** said rare earth ion is selected from the list constituted by: erbium, praseodymium, neodymium, and ytterbium.

8. A source according to any one of claims 1 to 5, **characterized in that** said light-emitting element is uranium.

9. A source according to any one of claims 1 to 5, **characterized in that** said light-emitting element is an organic molecule.

10. A source according to any one of claims 1 to 9, **characterized in that** said solid material (10) is an electrical insulator.

11. A source according to claim 10, **characterized in that** said electrical insulator is selected from the list constituted by: silica, alumina, a nitride, a polymer, a glass, a fluorine-containing crystal, and a sol-gel.

12. A source according to any one of claims 1 to 9, **characterized in that** said solid material (10) is a semiconductor.

13. A source according to claim 12, **characterized in that** said semiconductor is selected from the list constituted by: amorphous silicon, polycrystalline silicon, and GaN, GaAs, GaP, GaSb, InP, and derivatives thereof.

14. A source according to any one of claims 1 to 13, **characterized in that** it includes means for controlling the capture of the emitted photon by the probe (30).

15. A source according to claim 14, **characterized in that** said control means are means for controlling the distance between the probe (30) and the light-emitting element.

16. A source according to any one of claims 1 to 15, **characterized in that** said probe (30) is formed by a taperedg point (31) of size smaller than 1 µm.

17. A source according to claim 16, **characterized in that** said tapered point (31) is made of a material that is dielectric or semiconductive.

18. A source according to claim 16, **characterized in that** said tapered point (31) is made of carbon or of silicon.

19. A source according to any one of claims 16 to 18, **characterized in that** said tapered tip (31) is constituted by the end of an optical fiber.

## Patentansprüche

1. Quelle von wenigen Photonen, die steuerbar ist und eine vorbestimmte Wellenlänge aufweist, **dadurch gekennzeichnet, dass** die Quelle ein festes Material (10), in das in verdünnter Konzentration Lumineszenzelemente (11) mit der vorbestimmten Wellenlänge eingesetzt sind, eine Anregungsvorrichtung (20) der Lumineszenzelemente und eine Sonde (30) aufweist, die in der Lage ist, durch Kopplung im nahen Feld mindestens ein Photon einzufangen, das von einem der Lumineszenzelemente emittiert wird.

2. Quelle nach Anspruch 1, **dadurch gekennzeichnet, dass** die Oberflächenkonzentration der Lumineszenzelemente im festen Material unter 10 pro µm2 liegt.

3. Quelle nach Anspruch 2, **dadurch gekennzeichnet, dass** die Oberflächenkonzentration für eine Einzelphotonenquelle unter 1 pro µm2 liegt.

4. Quelle nach einem der Ansprüche 1 bis 3, **dadurch gekennzeichnet, dass** das von der Sonde (30) eingefangene Photon in den freien Raum emittiert wird.

5. Quelle nach einem der Ansprüche 1 bis 3, **dadurch gekennzeichnet, dass** eine Lichtleitfaser (40) für den Transport des eingefangenen Photons mit der Sonde (30) gekoppelt ist.

6. Quelle nach einem der Ansprüche 1 bis 5, **dadurch gekennzeichnet, dass** das Lumineszenzelement ein Seltenerdion ist.

7. Quelle nach Anspruch 6, **dadurch gekennzeichnet, dass** die Seltenerde aus der Liste ausgewählt wird, die aus Erbium, Praseodym, Neodym und Ytterbium besteht.

8. Quelle nach einem der Ansprüche 1 bis 5, **dadurch gekennzeichnet, dass** das Lumineszenzelement Uran ist.

9. Quelle nach einem der Ansprüche 1 bis 5, **dadurch gekennzeichnet, dass** das Lumineszenzelement ein organisches Molekül ist.

10. Quelle nach einem der Ansprüche 1 bis 9, **dadurch gekennzeichnet, dass** das feste Material (10) ein elektrischer Isolator ist.

11. Quelle nach Anspruch 10, **dadurch gekennzeichnet, dass** der elektrische Isolator aus der Liste ausgewählt wird, die aus Siliciumdioxid, Aluminiumdioxid, einem Nitrid, einem Polymer, einem Glas, einem fluorierten Kristall, einem Sol-Gel besteht.

12. Quelle nach einem der Ansprüche 1 bis 9, **dadurch gekennzeichnet, dass** das feste Material (10) ein Halbleiter ist.

13. Quelle nach Anspruch 12, **dadurch gekennzeichnet, dass** der Halbleiter aus der Liste ausgewählt wird, die aus amorphem Silicium, polykristallinem Silicium, sowie aus GaN, GaAs, GaP, GaSb, InP und ihren Derivaten besteht.

14. Quelle nach einem der Ansprüche 1 bis 13, **dadurch gekennzeichnet, dass** sie Mittel zur Überwachung des Einfangens des emittierten Photons durch die Sonde (30) aufweist.

15. Quelle nach Anspruch 14, **dadurch gekennzeichnet, dass** die Überwachungsmittel Überwachungsmittel des Abstands zwischen der Sonde (30) und dem Lumineszenzelement sind.

16. Quelle nach einem der Ansprüche 1 bis 15, **dadurch gekennzeichnet, dass** die Sonde (30) von einer verjüngten Spitze (31) mit einer Größe von weniger als 1 µm gebildet wird.

17. Quelle nach Anspruch 16, **dadurch gekennzeichnet, dass** die verjüngte Spitze (31) aus einem dielektrischen oder einem Halbleitermaterial besteht.

18. Quelle nach Anspruch 16, **dadurch gekennzeichnet, dass** die verjüngte Spitze (31) aus Kohlenstoff oder aus Silicium besteht.

19. Quelle nach einem der Ansprüche 16 bis 18, **dadurch gekennzeichnet, dass** die verjüngte Spitze (31) aus dem Ende einer Lichtleitfaser besteht.
